# EUROPÄISCHE PATENTSCHRIFT

(11) **EP 3 990 332 B1**
(45) Veröffentlichungstag und Bekanntmachung des Hinweises auf die Patenterteilung: **02.08.2023**
(21) Anmeldenummer: 20735505.8
(22) Anmeldetag: 22.06.2020
(51) Int. Cl.: B61C 9/50

(54) **RADSATZGETRIEBE**
WHEELSET GEARBOX
ENTRAÎNEMENT D'ESSIEU MONTÉ

(30) Priorität: 28.06.2019 DE 102019117515
(43) Veröffentlichungstag der Anmeldung: 04.05.2022
(73) Patentinhaber: Voith Patent GmbH, 89522 Heidenheim (DE)
(72) Erfinder: LUBOS, Florian, 89542 Herbrechtingen (DE)
(86) Internationale Anmeldenummer: PCT/EP2020/067305
(87) Internationale Veröffentlichungsnummer: WO 2020/260183

(56) Entgegenhaltungen:
- WO-A1-2014/135416
- WO-A1-2014/165370
- CN-U- 206 856 721
- DE-A1-102016 213 998
- US-A1- 2001 022 256

## Beschreibung

Die Erfindung betrifft ein Radsatzgetriebe zum Antrieb einer Radsatzwelle eines Schienenfahrzeugs umfassend eine Eingangswelle, eine oder mehrere Getriebestufen gebildet aus ineinander greifenden Zahnrädern, eine Abtriebswelle und ein Getriebegehäuse, wobei Antriebsdrehmoment von der Eingangswelle auf die Abtriebswelle übertragen werden kann. Die Abtriebswelle kann dabei direkt die Radsatzwelle sein oder mit der Radsatzwelle gekoppelt sein.

Radsatzgetriebe sind beispielsweise aus der DE 102016213998 A1 oder CN 206 856 721 U bekannt.

Getriebe mit ineinander greifenden Zahnrädern verursachen Geräusche, die sich über das Getriebegehäuse ausbreiten und störend sein können. Ganz allgemein sind verschiedene Möglichkeiten zur Geräuschreduktion bei Getrieben bekannt, wie sie in der WO 2016/173751 A1 aufgezählt werden. Die allerdings in der im Stand der Technik bekannten Ausführung nicht ausreichend und nicht zufriedenstellend wirken. Daher schlägt die WO 2016/173751 A1 eine aktive Regelung zur Reduktion der Schwingungen vor. Dazu wird ein Sensor verwendet, der eine entsprechende Schwingung detektiert und an eine Regeleinrichtung weitergibt. Weiterhin ist ein Aktuator an zumindest einem der Lager der Zahnräder vorgesehen, der von der Regeleinrichtung so angesteuert werden, kann das sich die gelagerte Komponente also das Zahnrad etwas verschiebt, wodurch die Schwingungen verändert und die Zahnradgeräusche reduziert werden können. Ein solches System ist sehr komplex und daher teuer und störanfällig.

Die Aufgabe der Erfindung ist es nun, das Radsatzgetriebe so weiterzuentwickeln, dass eine ausreichende und zuverlässige, also wenig störanfällige Geräuschreduktion bewirkt wird.

Die Aufgabe wird durch eine Radsatzgetriebeeinheit mit den Merkmalen gemäß Anspruch 1 gelöst. Weitere vorteilhafte Merkmale sind in den abhängigen Ansprüchen genannt. Die verschiedenen, beschriebenen Merkmale können nicht nur einzeln sondern auch in Kombination genutzt werden, um die erfindungsgemäße Ausführung weiter zu verbessern.

Erfindungsgemäß zeichnet sich das Radsatzgetriebe dadurch aus, dass zumindest ein Schwingungstilger mit dem Getriebegehäuse verbunden ist, wobei der Schwingungstilger zumindest eine Tilgermasse aufweist, die über zumindest eine elastische Kopplung derart mit dem Getriebegehäuse gekoppelt ist, dass die Tilgermasse eine translatorische Schwingung mit einer Hauptschwingungsrichtung S im Wesentlichen senkrecht zur Rotationsachse der Abtriebswelle ausführen kann und wobei ein Tilgergehäuse vorhanden ist, das den Schwingungstilger einkapselt.

Durch die Verzahnung angeregte Schwingungen von Radsatzgetrieben hängen besonders von der Zähnezahl der Zahnräder ab. Trifft eine solche angeregte Schwingung mit einer Eigenfrequenz des Getriebegehäuses zusammen, wird diese Schwingung verstärkt und es entstehen unerwünschte Geräusche. Besonders störend ist es, wenn es eine starke Tonalität aufweist, also ein Geräusch mit eine sehr ausgeprägten einzelnen Frequenz. Diese besonders kritischen Frequenzen und die relvante schwingende Modalmasse können bei der konstruktiven Auslegung des Radsatzgetriebes ermittelt werden. Der Schwingungstilger des erfindungsgemäßen Radsatzgetriebes kann dann in Bezug auf seine Tilgermasse und die elastische Kopplung gezielt auf diese zu reduzierende Schwingung abgestimmt werden. Der Schwingungstilger ist ein Feder-Masse-Dämpfer-System.

Unter einkapseln wird hier verstanden, dass der Schwingungstilger durch das Tilgergehäuse auf mehreren Seiten umgeben ist und dadurch von Umgebungseinflüssen abgeschirmt wird. Insbesondere wird dadurch der Temperatureinfluss der Umgebung auf den Schwingungstilger reduziert, so dass vor allem bei niedrigen Umgebungstemperaturen die Funktion ausreichend gewährleistet bleibt. Die elastische Kopplung und damit die Funktion ist temperaturabhängig, bei zu niedriger Temperatur wird die elastische Kopplung zu steif und wirkt nicht gegen die unerwünschten Frequenzen. Durch die Kapselung kann der Schwingungstilger schneller vom Getriebe im Betrieb aufgewärmt werden und verliert nicht so viel Wärme. Zusätzlich wird der Schwingungstilger vor Verschmutzung und Beschädigung geschützt. Das ist bei Radsatzgetrieben eine besonders hohe Anforderung, da diese im Betrieb unter dem Schienenfahrzeug sehr harschen Bedingungen ausgesetzt sind.

Das Tilgergehäuse ist bevorzugt direkt am Getriebegehäuse befestigt und ist besonders bevorzugt dicht abschließend zu diesem ausgeführt.

Das Tilgergehäuse kann mit dem Schwingungstilger verbunden und zusammen mit diesem am Getriebegehäuse befestigt sein. Alternativ kann das Tilgergehäuse den Schwingungstilger zwar einkapseln, ist mit diesem aber nicht verbunden, sondern unabhängig von diesem am Getriebegehäuse befestigt.

Untersuchungen haben ergeben, dass die Seitenflächen des Getriebegehäuses relativ steif sind, während die Außenflächen des Getriebegehäuses zu Membranschwingungen neigen, die die Geräuschentwicklung verstärken. Wird nun der Schwingungstilger wie oben beschrieben ausgeführt, reduziert er die Schwingungen, die zur Geräuschentwicklung beitragen, besonders wirkungsvoll.

Insbesondere ist es von Vorteil, den Schwingungstilger an einer der Außenflächen zu befestigen. Außenflächen sind die Flächen, die zumindest teilweise parallel zur Rotationsachse der Abtriebswelle angeordnet sind.

Ebenso ist der Schwingungstilger besonders wirkungsvoll, wenn er in etwa mittig in Bezug auf das Getriebegehäuse, gemessen entlang der Rotationsachse der Abtriebswelle, an der Außenfläche befestigt ist. Und weiterhin ist der Schwingungstilger bevorzugt an einer Verstärkungsstelle, zum Beispiel an einer Rippe, des Getriebegehäuses befestigt, so dass der Tilger durch sein eigenes Gewicht nicht lokal die Eigenfrequenz des Getriebegehäuses zu stark verändert.

Die elastische Kopplung ist bevorzugt so ausgeführt, dass die Tilgermasse zwischen einer ersten elastischen Schicht und einer zweiten elastischen Schicht angeordnet ist. Dabei kann die elastische Schicht insbesondere als Gummischicht oder als Gummi-enthaltende Schicht oder als Polymerschicht ausgeführt sein

Weiterhin ist es von Vorteil wenn die Befestigung des Schwingungstilgers so ausgeführt ist, dass damit die elastische Kopplung mehr oder weniger vorgespannt und damit ihre Steifigkeit verändert werden kann, um so die Tilgerfrequenz gezielt verändern zu können. Damit kann der Schwingungstilger auf bestimmte Anforderungen zum Beispiel auf bestimmte störende Frequenzen abgestimmt werden. Eine solche Beeinflussung der Vorspannung ist nicht nur bei einer elastischen Kopplung, die als elastische Schicht ausgeführt ist, anwendbar, sondern auch bei anderen Varianten, wie beispielsweise bei Verwendung von Federn oder anderen Feder-Dämpfer-Elementen.

Die Befestigung kann bevorzugt als am Schwingungstilger im Wesentlichen mittig angeordnete Schraube ausgeführt werden, deren Längsachse im Wesentlichen in Richtung der Hauptschwingungsrichtung S liegt. Das ist vor allem sinnvoll in Kombination damit, dass die Befestigungsschraube zusätzlich dazu dient, die Steifigkeit der elastischen Kopplung zu verändern. Denn dann kann die Steifigkeit der elastischen Kopplung in Richtung der Hauptschwingungsrichtung S beeinflusst werden.

Besondres vorteilhaft wird der Schwingungstilger so angeordnet, dass er in Einbaulage des Radsatzgetriebes oberhalb der Abtriebswelle insbesondere der Radsatzwelle positioniert ist. Dadurch ist er gegen Steinschlag und andere Beschädigungen im Betrieb am besten geschützt. Zudem ist in dieser Position meist genug Bauraum vorhanden.

Wird die Tilgermasse aus mehreren Einzelmassen, insbesondere aus mehreren scheibenförmigen Elementen aufgebaut, bietet sich der Vorteil, dass die Eigenfrequenz durch eine gezielte Auswahl der Tilgermasse, leicht angepasst werden kann. Durch diese modulare Bauweise kann eine Abstimmung des Schwingungstilgers erfolgen.

Im Rahmen der Entwicklung hat sich als sehr vorteilhaft herausgestellt, wenn die Tilgermasse ein Gewicht von mindestens 50 g und von höchstens 500 g aufweist. Liegt die Tilgermasse in diesem Gewichtsbereich, kann die Geräuschentwicklung aufgrund von Schwingungen besonders positiv beeinflusst werden. Bevorzugt sollte die Tilgermasse im Bereich von 5 - 10 % der Modalmasse des Getriebegehäuses liegen. Die Modalmasse ist die bei der störenden Frequenz angeregte schwingende Masse des Getriebegehäuses. Bei einer Modalmasse des Radsatzgetriebes von 1500 g bis 2500 g sollte demnach die Tilgermasse im Bereich von mindestens 75 g bis maximal 250 g liegen.

Besonders vorteilhaft ist die Erfindung einsetzbar bei Radsatzgetrieben, die Stirnräder aufweisen, da hierbei besonders störende Schwingungen durch die Zahneingriffe erzeugt werden können.

Vor allem wenn Zahnräder mit mehr als 90 Zähnen auf der Abtriebswelle verwendet werden, entstehen Frequenzen die zu unerwünschten Schwingungen führen. Daher ist hier der Einsatz eines erfindungsgemäßen Schwingungstilgers am Radsatzgetriebe von Vorteil.

Und insbesondere kann die erfindungsgemäße Ausführung auch bei zweistufigen Radsatzgetrieben erfolgreich zur Lärmreduktion eingesetzt werden.

Anhand von Ausführungsbeispielen werden weitere vorteilhafte Merkmale der Erfindung erläutert unter Bezugnahme auf die Zeichnungen.
- **Fig. 1**: Darstellung eines Radsatzgetriebes in Einbausituation
- **Fig. 2**: Darstellung eines erfindungsgemäßen Radsatzgetriebes
- **Fig. 3**: Schematische Darstellung eines erfindungsgemäßen Radsatzgetriebes
- **Fig. 4**: Weitere erfindungsgemäße Ausführung eines zweistufigen Radsatzgetriebes

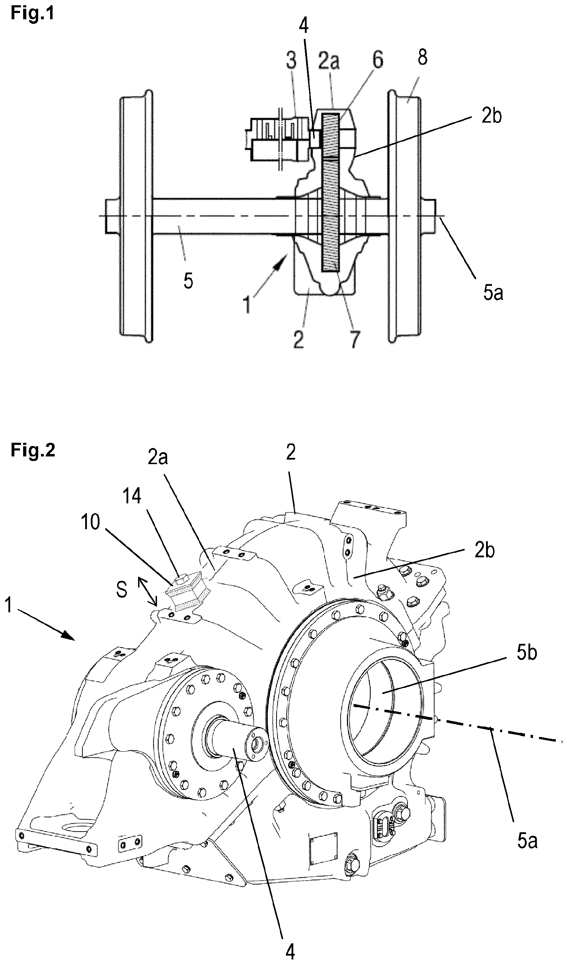

**Fig. 1** zeigt eine Einbausituation für ein Radsatzgetriebe 1 in Draufsicht. Dargestellt ist ein Radsatz mit einer Radsatzwelle 5 und zwei Schienenrädern 8, wobei die Radsatzwelle 5 hier auch gleichzeitig die Abtriebswelle des Radsatzgetriebes 1 ist. Das Radsatzgetriebe 1 umfasst eine Eingangswelle 4, eine Getriebestufe, von den Zahnrädern 6 und 7 gebildet, und ein Getriebegehäuse 2, das die Getriebestufe umschließt. Die Zahnräder 6,7 sind als Stirnräder ausgebildet. Das Getriebegehäuse 2 weist Seitenflächen 2b auf, deren flächige Ausdehnung zumindest teilweise senkrecht zur Rotationsachse 5a der Radsatzwelle liegt, und es weist Außenflächen 2a auf, deren flächige Ausdehnung zumindest teilweise parallel zur Achse 5a liegt.

Die Eingangswelle 4 kann über eine Kupplung 3 mit einem Antriebsmotor verbunden werden. Somit wird das Antriebsdrehmoment des Motors gegebenenfalls noch über ein zwischengeschaltetes Getriebe auf das Radsatzgetriebe 1 und von diesem auf die Radsatzwelle übertragen.

In **Fig.2** ist ein erfindungsgemäßes Radsatzgetriebe 1 dargestellt. Über die Eingangswelle 4 kann das Antriebsdrehmoment vom Motor eingebracht werden und auf die Abtriebswelle übertragen werden, wobei die Abtriebswelle nicht dargestellt ist, nur deren Lagerung 5b. Das Getriebegehäuse 2 umschließt die Stirnrad-Getriebestufe des hier einstufig ausgeführten Radsatzgetriebes 1. Das Getriebegehäuse 2 weist Seitenflächen 2b und Außenflächen 2a auf, wobei sich die Außenflächen 2a zumindest teilweise parallel zur Rotationsachse 5a der Abtriebswelle erstrecken. Der Schwingungstilger 10 weist eine Tilgermasse auf und ist derart über eine elastische Kopplung an einer der Außenflächen 2a befestigt, dass die Tilgermasse entlang der Hauptschwingungsrichtung S zum Schwingen angeregt werden kann. Das Tilgergehäuse ist in dieser Darstellung weggelassen, damit der Aufbau des Tilgers erkennbar ist. Bei richtiger Auslegung der Tilgermasse und der elastischen Kopplung in Bezug auf die schwingende Modalmasse und die zu unterdrückende Schwingungsfrequenz kann die Membranschwingung der Getriebegehäuse-Flächen und somit die Geräuschabstrahlung zuverlässig reduziert werden.

Bevorzugt ist der Schwingungstilger 10 im Bereich einer Verstärkung der Außenfläche 2a angebracht, also beispielsweise im Bereich einer Rippe, so dass die Eigenfrequenz des Getriebegehäuses 2 nicht durch den Tilger selbst lokal zu stark verändert wird. Weiterhin bevorzugt ist er möglichst mittig, gemessen entlang der Rotationsachse 5a, in einer der Außenflächen 2a angeordnet, um effektiv zu wirken. Im vorliegenden Ausführungsbeispiel ist der Schwingungstilger 10 über die Inspektionsschraube am Getriebegehäuse befestigt, so sind keine Veränderungen am Getriebegehäuse 2, das oftmals als Gussteil ausgeführt ist, nötig, um das Radsatzgetriebe 1 mit einem Schwingungstilger auszurüsten.

Bevorzugt ist der Schwingungstilger 10 in Einbaulage des Radsatzgetriebes 1, so wie hier gezeigt, oberhalb der Abtriebswelle 5, hier der Radsatzwelle, angeordnet.

Die Schraube der Befestigung 14 kann zusätzlich dazu genutzt werden, die elastischen Schichten des Schwingungstilgers 10 mehr oder weniger vorzuspannen, wodurch deren Steifigkeit verändert wird. So kann die Tilgerfrequenz, bei der der Schwingungstilger die größte Reduktionswirkung hat, gezielt verändert und dadurch auf das gewünschte Verhalten eingestellt werden.

Das Schwingungsverhalten und die Eigenfrequenz des Schwingungstilgers 10 kann auch dadurch verändert werden, dass die Tilgermasse verändert wird. Dazu ist es von Vorteil, wenn die Tilgermasse 11 aus mehreren Einzelmassen besteht, insbesondere aus mehreren scheibenförmigen Elementen. So kann die Masse besonders leicht verändert werden, indem einzelne Elemente dazugefügt oder herausgenommen werden.

Weiterhin kann insbesondere noch ein zweiter unabhängiger und analog aufgebauter Schwingungstilger vorgesehen werden, der zum Beispiel auf eine andere Schwingungsfrequenz abgestimmt ist, um diese zu reduzieren.

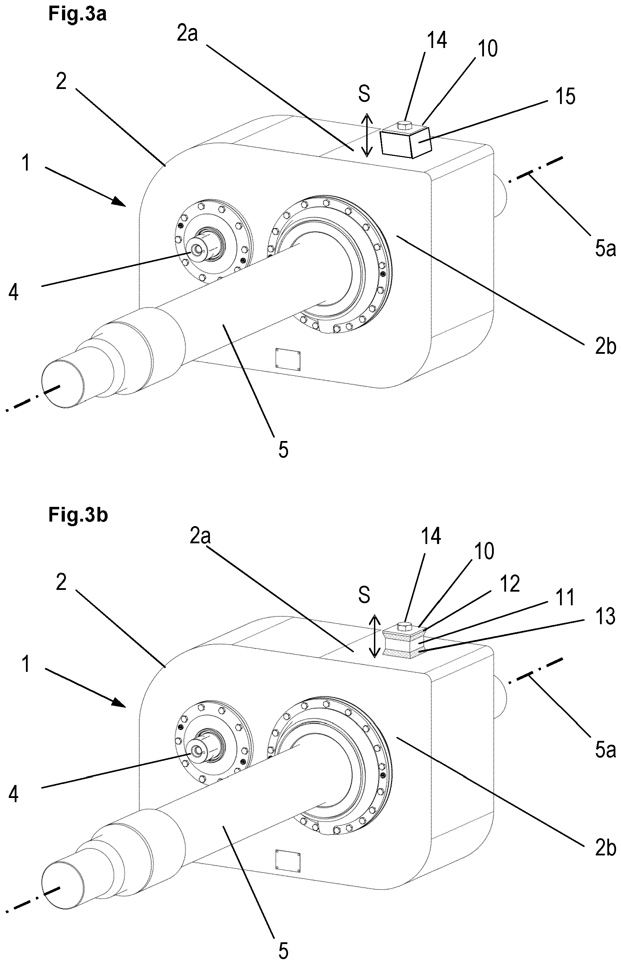

**Fig.3a und 3b** zeigen eine schematische Darstellung eines erfindungsgemäßen Radsatzgetriebes 1. Deutlich zu erkennen sind hier die übertrieben vereinfacht dargestellten Außenflächen 2a und Seitenflächen 2b des Getriebegehäuses 2.

Wobei sich die Außenflächen 2a zumindest teilweise parallel und die Seitenflächen 2b zumindest teilweise senkrecht zur Rotationsachse 5a der Radsatzwelle 5 erstrecken. In Fig.3a ist der Schwingungstilger 10 mit dem Tilgergehäuse 15 zu sehen. Über eine gemeinsame Befestigung 14 ist der Schwingungstilger 10 mit dem Tilgergehäuse 15 am Getriebegehäuse befestigt. Alternativ könnte nur der Schwingungstilger über die Befestigung 14 am Getriebegehäuse befestigt sein, während das Tilgergehäuse 15 separat am Getriebegehäuse befestigt wird.

In Fig.3b ist der Schwingungstilger 10 wieder ohne Tilgergehäuse dargestellt, Der Schwingungstilger 10 weist eine Tilgermasse 11 auf, die zwischen den elastischen Schichten 12,13, die als elastische Kopplung vorgesehen sind, schwingen kann. Die elastischen Schichten 12,13 können bevorzugt als Gummi-Schichten oder Polymerschichten ausgelegt sein. Die Hauptschwingungsrichtung ist mit S bezeichnet und liegt im Wesentlichen senkrecht zur Rotationsachse 5a. Über eine Befestigung 14, hier als Schraube dargestellt, ist der Schwingungstilger 10 an einer der Außenflächen 2a befestigt. Durch die erfindungsgemäße Anordnung des Schwingungstilgers wird insbesondere die Anregung der Membranschwingung der Außenflächen 2a reduziert und somit die Geräuschentwicklung verringert.

Wie zuvor bereits beschrieben, kann die Befestigung 14 so ausgeführt sein, dass die elastische Schicht 12 und/oder 13 mehr oder weniger vorgespannt werden, wodurch die Tilgerfrequenz verändert und damit die Tilgerwirkung gezielt abgestimmt werden kann.

Generell kann der Schwingungstilger für alle erfindungsgemäßen Ausführungsformen auch anders als hier dargestellt ausgeführt werden. Wichtig ist, dass eine Tilgermasse vorhanden ist, die über eine elastische Kopplung so mit dem Getriebegehäuse verbunden ist, dass sie relativ zum Gehäuse eine Schwingung ausführen kann, wobei die Hauptschwingungsrichtung S der Tilgermasse im Wesentlichen senkrecht zur Rotationsachse 5a der Abtriebswelle erfolgt. Beispielsweise kann die elastische Kopplung über Feder-Dämpfer-Elemente erfolgen.

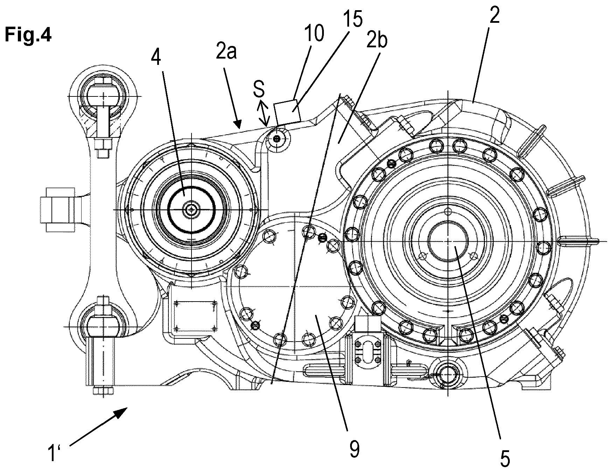

Die **Fig.4** zeigt noch eine weitere Ausführungsform eines erfindungsgemäßen Radsatzgetriebes 1', hier als zweistufiges Getriebe ausgeführt. Neben der Eingangswelle 4 und der Abtriebswelle 5 befindet sich noch eine Zwischenwelle, die sich hinter der Abdeckung 9 befindet und ebenfalls ein Zahnrad trägt. Der Schwingungstilger 10 und das Tilgergehäuse 15 sind an einer der Außenflächen 2a des Getriebegehäuses 2 befestigt. Der Schwingungstilger 10 weist eine Hauptschwingungsrichtung S auf, die im Wesentlichen senkrecht zur Rotationsachse der Abtriebswelle 5 liegt.

Auch hier ist der Schwingungstilger 10 so angeordnet, dass er sich in Einbaulage des Radsatzgetriebes 1' oberhalb der Abtriebswelle 5 befindet.

### Bezugszeichenliste

- 1, 1': Radsatzgetriebe
- 2: Getriebegehäuse
- 2a: Außenfläche
- 2b: Seitenfläche
- 3: Kupplung
- 4: Eingangswelle
- 5: Radsatzwelle
- 5a: Rotationsachse der Radsatzwelle
- 5b: Lagerung der Abtriebswelle
- 6, 7: Zahnräder einer Getriebestufe
- 8: Schienenrad
- 9: Abdeckung
- 10: Schwingungstilger
- 11: Tilgermasse
- 12, 13: elastische Schicht
- 14: Befestigung
- 15: Tilgergehäuse

- S: Hauptschwingungsrichtung des Tilgers

## Patentansprüche

1. Radsatzgetriebe (1,1`) zum Antrieb einer Radsatzwelle eines Schienenfahrzeugs, umfassend eine Eingangswelle (4), eine oder mehrere Getriebestufen (6,7), eine Abtriebswelle (5) und ein Getriebegehäuse (2), wobei ein Antriebsdrehmoment von der Eingangswelle (4) auf die Abtriebswelle (5) übertragen werden kann, und wobei ein Schwingungstilger (10) mit dem Getriebegehäuse (2) verbunden ist, **dadurch gekennzeichnet, dass** der Schwingungstilger (10) zumindest eine Tilgermasse (11) aufweist, die über zumindest eine elastische Kopplung (12,13) derart mit dem Getriebegehäuse gekoppelt ist, dass die Tilgermasse (11) eine translatorische Schwingung mit einer Hauptschwingungsrichtung S im Wesentlichen senkrecht zur Rotationsachse (5a) der Abtriebswelle ausführen kann und wobei ein Tilgergehäuse (15) vorhanden ist, das den Schwingungstilger (10) einkapselt.

2. Radsatzgetriebe (1,1`) nach Anspruch 1
**dadurch gekennzeichnet,**
**dass** der Schwingungstilger (10) an einer Außenfläche (2a), die zumindest teilweise parallel zur Rotationsachse (5a) angeordnet ist, befestigt ist.

3. Radsatzgetriebe (1,1`) nach einem der vorherigen Ansprüche
**dadurch gekennzeichnet,**
**dass** der Schwingungstilger (10) so ausgeführt ist, dass die Tilgermasse (11) zwischen einer ersten elastischen Schicht (13) und einer zweiten elastischen Schicht (12) angeordnet ist.

4. Radsatzgetriebe (1,1') nach
**dadurch gekennzeichnet,**
**dass** die Befestigung (14) des Schwingungstilgers (10) so ausgeführt ist, dass damit die elastische Kopplung (12,13) mehr oder weniger vorgespannt werden kann, um so die Tilgerfrequenz verändern zu können.

5. Radsatzgetriebe (1,1`) nach einem der vorherigen Ansprüche
**dadurch gekennzeichnet,**
**dass** die Befestigung (14) als am Schwingungstilger (10) im Wesentlichen mittig angeordnete Schraube, deren Längsachse im Wesentlichen in Richtung der Hauptschwingungsrichtung S liegt, ausgeführt ist

6. Radsatzgetriebe (1,1`) nach einem der vorherigen Ansprüche
**dadurch gekennzeichnet,**
**dass** der Schwingungstilger (10) in Einbaulage des Radsatzgetriebes (1,1') oberhalb der Abtriebswelle 5 angeordnet ist.

7. Radsatzgetriebe (1,1`) nach einem der vorherigen Ansprüche
**dadurch gekennzeichnet,**
**dass** die Tilgermasse (11) ein Gewicht von mindestens 50 g und von höchstens 500 g aufweist.

8. Radsatzgetriebe (1,1`) nach einem der vorherigen Ansprüche
**dadurch gekennzeichnet,**
**dass** die Tilgermasse (11) aus mehreren, insbesondere scheibenförmigen Einzelmassen zusammengesetzt ist.

9. Radsatzgetriebe (1,1`) nach einem der vorherigen Ansprüche
**dadurch gekennzeichnet,**
**dass** ein Zahnrad (7) der Getriebestufen auf der Abtriebswelle 5 mindestens 90 Zähne aufweist.

10. Radsatzgetriebe (1,1`) nach einem der vorherigen Ansprüche
**dadurch gekennzeichnet,**
**dass** das Radsatzgetriebe (1') als zweistufiges Getriebe ausgeführt ist.

11. Radsatzgetriebe (1,1') nach einem der vorherigen Ansprüche
**dadurch gekennzeichnet,**
**dass** die Zahnräder (6,7) der Getriebestufen als Stirnräder ausgeführt sind.

12. Radsatzgetriebe (1,1') nach einem der vorherigen Ansprüche
**dadurch gekennzeichnet,**
**dass** das Tilgergehäuse (15) direkt am Getriebegehäuse (2) befestigt ist und insbesondere zum Getriebegehäuse (15) dicht abschließt.

13. Radsatzgetriebe (1,1') nach einem der vorherigen Ansprüche
**dadurch gekennzeichnet,**
**dass** das Tilgergehäuse (15) den Schwingungstilger (10) einkapselt und mit diesem zusammen am Getriebegehäuse (2) befestigt ist.

14. Radsatzgetriebe (1,1`) nach einem der Ansprüche 1 bis 13
**dadurch gekennzeichnet,**
**dass** das Tilgergehäuse (15) den Schwingungstilger (10) einkapselt, mit diesem aber nicht verbunden ist, sondern unabhängig von diesem am Getriebegehäuse (2) befestigt ist.

## Claims

1. Wheelset transmission (1, 1') for driving a wheelset shaft of a rail vehicle, comprising an input shaft (4), one or a plurality of transmission stages (6, 7), an output shaft (5) and a transmission housing (2), wherein a drive torque can be transmitted from the input shaft (4) to the output shaft (5), and wherein a vibration absorber (10) is connected to the transmission housing (2), **characterized in that** the vibration absorber (10) has at least one absorber mass (11), which is coupled to the transmission housing via at least one elastic coupling (12, 13) in such a manner that the absorber mass (11) can carry out a translational vibration with a main vibration direction S substantially perpendicular to the axis of rotation (5a) of the output shaft, and wherein there is an absorber housing (15) that encloses the vibration absorber (10).

2. Wheelset transmission (1, 1') according to Claim 1,
**characterized**
**in that** the vibration absorber (10) is fastened to an outer surface (2a), which is arranged at least partially parallel to the axis of rotation (5a).

3. Wheelset transmission (1, 1') according to either of the preceding claims,
**characterized**
**in that** the vibration absorber (10) is designed such that the absorber mass (11) is arranged between a first elastic layer (13) and a second elastic layer (12).

4. Wheelset transmission (1, 1') according to
**characterized**
**in that** the fastening (14) of the vibration absorber (10) is designed so as to allow the elastic coupling (12, 13) to be preloaded to a greater or lesser extent, thereby allowing the absorber frequency to be modified.

5. Wheelset transmission (1, 1') according to any of the preceding claims,
**characterized**
**in that** the fastening (14) is in the form of a screw, which is arranged substantially centrally on the vibration absorber (10), the longitudinal axis of said screw being located substantially in the direction of the main vibration direction S.

6. Wheelset transmission (1, 1') according to any of the preceding claims,
**characterized**
**in that** the vibration absorber (10) is arranged above the output shaft (5) in the installed position of the wheelset transmission (1, 1').

7. Wheelset transmission (1, 1') according to any of the preceding claims,
**characterized**
**in that** the absorber mass (11) has a weight of at least 50 g and of at most 500 g.

8. Wheelset transmission (1, 1') according to any of the preceding claims,
**characterized**
**in that** the absorber mass (11) is made up of a plurality of individual masses, in particular in the form of discs.

9. Wheelset transmission (1, 1') according to any of the preceding claims,
**characterized**
**in that** one gearwheel (7) of the transmission stages on the output shaft (5) has at least 90 teeth.

10. Wheelset transmission (1, 1') according to any of the preceding claims,
**characterized**
**in that** the wheelset transmission (1') is in the form of a two-stage transmission.

11. Wheelset transmission (1, 1') according to any of the preceding claims,
**characterized**
**in that** the gearwheels (6, 7) of the transmission stages are in the form of spur gears.

12. Wheelset transmission (1, 1') according to any of the preceding claims,
**characterized**
**in that** the absorber housing (15) is fastened directly to the transmission housing (2) and in particular is tightly sealed off with respect to the transmission housing (15).

13. Wheelset transmission (1, 1') according to any of the preceding claims,
**characterized**
**in that** the absorber housing (15) encloses the vibration absorber (10) and is fastened to the transmission housing (2) together with said vibration absorber.

14. Wheelset transmission (1, 1') according to any of Claims 1 to 13,
**characterized**
**in that** the absorber housing (15) encloses, but is not connected to, the vibration absorber (10), instead being fastened to the transmission housing (2) independently of said vibration absorber.

## Revendications

1. Transmission d'essieu monté (1, 1') servant à l'entraînement d'un arbre d'essieu monté d'un véhicule ferroviaire, comprenant un arbre d'entrée (4), un ou plusieurs étages de transmission (6, 7), un arbre de sortie (5) et un boîtier de transmission (2), un couple d'entraînement pouvant être transmis de l'arbre d'entrée (4) à l'arbre de sortie (5), et un amortisseur de vibrations (10) étant relié au boîtier de transmission (2), **caractérisée en ce que** l'amortisseur de vibrations (10) présente au moins une masse d'amortissement (11) qui est accouplée au boîtier de transmission par le biais d'au moins un accouplement élastique (12, 13), de telle sorte que la masse d'amortissement (11) puisse effectuer une vibration en translation présentant une direction de vibration principale S sensiblement perpendiculaire à l'axe de rotation (5a) de l'arbre de sortie et un boîtier d'amortisseur (15) étant présent, lequel encapsule l'amortisseur de vibrations (10).

2. Transmission d'essieu monté (1, 1') selon la revendication 1,
**caractérisée en ce que**
l'amortisseur de vibrations (10) est fixé à une surface extérieure (2a) qui est disposée au moins partiellement parallèlement à l'axe de rotation (5a).

3. Transmission d'essieu monté (1, 1') selon l'une des revendications précédentes,
**caractérisée en ce que**
l'amortisseur de vibrations (10) est réalisé de telle sorte que la masse d'amortissement (11) est disposée entre une première couche élastique (13) et une deuxième couche élastique (12).

4. Transmission d'essieu monté (1, 1') selon
**caractérisée en ce que**
la fixation (14) de l'amortisseur de vibrations (10) est réalisée de telle sorte que l'accouplement élastique (12, 13) peut ainsi être plus ou moins précontraint, afin de de pouvoir modifier de cette manière la fréquence de l'amortisseur.

5. Transmission d'essieu monté (1, 1') selon l'une des revendications précédentes,
**caractérisée en ce que**
la fixation (14) est réalisée sous forme de vis disposée sensiblement centralement sur l'amortisseur de vibrations (10), vis dont l'axe longitudinal se situe sensiblement dans la direction de la direction de vibration principale S.

6. Transmission d'essieu monté (1, 1') selon l'une des revendications précédentes,
**caractérisée en ce que**
l'amortisseur de vibrations (10) est disposé au-dessus de l'arbre de sortie 5 dans la position d'installation de la transmission d'essieu monté (1, 1').

7. Transmission d'essieu monté (1, 1') selon l'une des revendications précédentes,
**caractérisée en ce que**
la masse d'amortissement (11) présente un poids d'au moins 50 g et d'au maximum 500 g.

8. Transmission d'essieu monté (1, 1') selon l'une des revendications précédentes,
**caractérisée en ce que**
la masse d'amortissement (11) est composée de plusieurs masses individuelles en particulier en forme de disques.

9. Transmission d'essieu monté (1, 1') selon l'une des revendications précédentes,
**caractérisée en ce**
**qu'**une roue dentée (7) des étages de transmission sur l'arbre de sortie 5 présente au moins 90 dents.

10. Transmission d'essieu monté (1, 1') selon l'une des revendications précédentes,
**caractérisée en ce que**
la transmission d'essieu monté (1') est réalisée sous forme de transmission à deux étages.

11. Transmission d'essieu monté (1, 1') selon l'une des revendications précédentes,
**caractérisée en ce que**
les roues dentées (6, 7) des étages de transmission sont réalisées sous forme de roues droites.

12. Transmission d'essieu monté (1, 1') selon l'une des revendications précédentes,
**caractérisée en ce que**
le boîtier d'amortisseur (15) est fixé directement au boîtier de transmission (2) et en particulier se termine hermétiquement par rapport au boîtier de transmission (15) .

13. Transmission d'essieu monté (1, 1') selon l'une des revendications précédentes,
**caractérisée en ce que**
le boîtier d'amortisseur (15) encapsule l'amortisseur de vibrations (10) et est fixé, conjointement avec celui-ci, au boîtier de transmission (2).

14. Transmission d'essieu monté (1, 1') selon l'une des revendications 1 à 13,
**caractérisée en ce que**
le boîtier d'amortisseur (15) encapsule l'amortisseur de vibrations (10), mais n'est pas relié à celui-ci, mais est plutôt, indépendamment de celui-ci, fixé au boîtier de transmission (2).
